# EUROPÄISCHE PATENTSCHRIFT

(11) **EP 1 469 174 B1**
(45) Veröffentlichungstag und Bekanntmachung des Hinweises auf die Patenterteilung: **28.06.2006**
(21) Anmeldenummer: 04000306.3
(22) Anmeldetag: 09.01.2004
(51) Int. Cl.: F02B 23/06, F02B 17/00, F02B 23/10, F02F 3/28

(54) **Hubkolben-Brennkraftmaschine mit Benzin-Direkteinspritzung**
Reciprocating piston internal combustion engine with gasoline direct injection
Moteur à piston alternatif à combustion interne avec injection directe d'essence

(30) Priorität: 03.02.2003 DE 10304167
(43) Veröffentlichungstag der Anmeldung: 20.10.2004
(73) Patentinhaber: Bayerische Motoren Werke Aktiengesellschaft, 80809 München (DE)
(72) Erfinder: Pater, Piet, 85368 Moosburg (DE); Gartner, Jurij, 82110 Germering (DE); Otten, Reinhold, 82234 Wessling (DE)

(56) Entgegenhaltungen:
- EP-A- 0 778 403
- EP-A- 0 879 942
- EP-A- 1 008 734
- DE-A- 19 716 642
- US-B1- 6 253 728

## Beschreibung

Die Erfindung betrifft eine Hubkolben-Brennkraftmaschine mit Benzin-Direkteinspritzung gemäß der Merkmale im Oberbegriff des Patentanspruchs 1.

Zum technischen Umfeld der Erfindung wird beispielsweise auf die EP 0 879 942 A2 und das korrespondierende US-Patent US 6,253,728 B1 verwiesen. In dieser ist eine direkteinspritzende Brennkraftmaschine beschrieben, in deren Zylinder sich vorwiegend eine tumble-Strömung ausbildet, während sich in einer Kolbenmulde eine Drallströmung ausbildet.

Weiter wird auf die deutsche Patentschrift DE 197 16 642 hingewiesen, von der diese Erfindung ausgeht. In dieser Schrift ist ein Mehrzylinder-Otto-Motor mit Kraftstoffdirekteinspritzung mit folgenden Merkmalen beschrieben:
➢ Jeder Zylinder weist zwei Einlass- und zwei Auslassventile auf, wobei deren Kanäle jeweils von einer Ansauganlage gespeist bzw. in eine Abgasanlage eingeleitet werden;
➢ Die Einlassventile sind symmetrisch zu einer durch die Zylinderachse verlaufenden, vorzugsweise senkrecht zur Kurbelwellenachse stehenden Ebene einer ersten Zylinderprojektionshälfte angeordnet;
➢ Die Zündkerze ist in etwa zentrisch zur Zylinderachse angeordnet;
➢ Eines der Einlassventile ist direkt oder indirekt über das Schließen des ihm zugehörigen Einlasskanals abschaltbar;
➢ Zwischen dem stetig öffnenden Einlassventil und dem auf der gegenüberliegenden zweiten Zylinderprojektionshälfte mündenden Auslassventil ist der Abstand größer als zwischen dem Einlassventil für den abschaltbaren Einlasskanal und dem diesen gegenüberliegenden Auslassventil;
➢ Die Einspritzdüse mündet versetzt zur Zylinderachse zwischen dem stetig öffnenden Einlassventil und dem auf der zweiten Zylinderprojektionshälfte gegenüberliegenden Auslassventil in den Brennraum;
➢ Der Brennraum ist einerseits von dem Zylinderkopf und andererseits von dem Kolben begrenzt, wobei der Brennraum in ein zylinderkopfseitiges und ein kolbenseitiges Volumen aufgeteilt ist;
➢ Die Gaswechselventile weisen Ventilteller auf.

Mit dieser Geometrie wird ein wenig zerklüfteter, kompakter Brennraum erzielt, der mit unterschiedlichen Betriebsverfahren betrieben werden kann und im Hinblick auf den Kraftstoffverbrauch eine hohe Wirtschaftlichkeit sowie einen minimalen Schadstoffausstoß aufweist.

Um mit der vorgeschlagenen Ausgestaltung die Brennkraftmaschine mit unterschiedlichen Betriebsverfahren zu betreiben, ist für eines der Einlassventile die Hubfunktion abschaltbar. Durch das Abschalten wird von einer sog. Tumbleströmung auf eine sog. Drallströmung im Brennraum umgeschaltet, um für den jeweiligen Betriebspunkt der Brennkraftmaschine ideale Voraussetzungen für eine optimale Verbrennung im Brennraum zu erhalten.

Nachteilig bei der beschriebenen Ausgestaltung ist jedoch die Ausformung der Kolbenoberfläche, mit einer einseitig ausgerichteten Brennraummulde, die entweder für die Tumble- oder für die Drallströmung besonders geeignet ist, jedoch nicht für beide Strömungen optimiert ist.

Aufgabe der vorliegenden Erfindung ist es, für eine gattungsgemäße Brennkraftmaschine eine Kolbenoberflächengeometrie aufzuzeigen, die sowohl für eine Tumble- als auch für eine Drallströmung eine optimierte Kolbenform aufweist.

Diese Aufgabe wird erfindungsgemäß durch die Merkmale im kennzeichnenden Teil des Patentanspruchs 1 gelöst.
Durch die vorgeschlagene Ausgestaltung des konkaven Bereichs, der abschnittsweise aus einer Kugelkalotte dargestellt ist, ist dieser Kolben gleichermaßen für eine tumble- und für eine Drallströmung optimal ausgelegt. Unter tumble-Strömung wird eine Rotationsströmung im Zylinder verstanden, deren Rotationsachse weitgehend senkrecht zur Zylinderachse liegt, unter Drallströmung wird eine Rotationsströmung verstanden, deren Rotationsachse weitgehend parallel zur Zylinderachse ist. Durch die Einbringung einer ebenen Fläche in den konkaven Bereich wird die Tiefe des konkaven Bereichs reduziert, wodurch der Kolben insgesamt flacher baut. Aufgrund der reduzierten Kolbenhöhe ist die Kolbenmasse über dem Kolbenbolzen entsprechend niedriger. Hierdurch wird der Kolbenschwerpunkt im Kolbenbolzenbereich niedriger, was zu einem geringeren Kolbenkippen führt und somit beim Betrieb der Brennkraftmaschine wesentlich höhere Drehzahlen zulässt. Die räumliche Lage des Flächenschwerpunktes in der Projektion zwischen der Zündeinrichtung und dem Benzineinspritzventil ist derart ausgelegt, dass eingespritzter Kraftstoff während der Kompressionsphase mit der Ansaugluft vermischt bzw. homogenisiert und anschließend zur Zündeinrichtung transportiert und um die Zündeinrichtung konzentriert wird. Der geforderte kolbenseitige Höchstvolumenanteil von 40 % ermöglicht einen linsenförmigen Brennraum mit günstigen Flammwegen trotz eines hohen Ver-dichtungsverhältnisses, größer als 10. Aufgrund des niedrigen Schwerpunktes des Kolbens wird nach einer Zündung ein Kolbenkippen vermieden und somit in vorteilhafter Weise der Verschleiß reduziert bzw. die Lebensdauer der Brennkraftmaschine erhöht. Ferner werden nahezu alle nicht zum konkaven Bereich gehörenden Oberflächenbereiche des Kolbens als Quetschflächen benutzt. Dies bedeutet, dass die Flächen außerhalb des konkaven Bereichs, kurz vor der oberen Totpunktlage des Kolbens, das in ihrer Umgebung angesammelte Kraftstoff-/Luftgemisch kurz vor dem Zündzeitpunkt in Richtung des konkaven Bereichs verdrängen. Hierdurch wird eine Ladungsbewegung im Brennraum erzeugt und die Brenngeschwindigkeit erhöht. Durch diese Maßnahmen kann die Brennkraftmaschine mit einem höheren Luftüberschuss betrieben werden.

Der Krümmungsradius des konkaven Bereichs im Bereich zwischen 10 und 300 mm gemäß Patentanspruch 2 ermöglicht die optimale Anpassung des konkaven Bereichs auf die entsprechende Zylinderkopfgeometrie.

Durch die Begrenzung der Schiefstellung der ebenen Fläche bezüglich der Senkrechten auf die Brennraumachse wird die maximale Tiefe des konkaven Bereichs beschränkt. Durch die Ausgestaltung gemäß Patentanspruch 3 baut der Kolben sehr flach, wodurch die Kolbenmasse reduziert wird und höhere Drehzahlen aufgrund der geringeren auftretenden Massenkräfte sowie des niedrigen Schwerpunktes des Kolbens möglich sind.

Die Ausgestaltung gemäß der Patentansprüche 6 und 7 erlaubt es, den Kolben beim Betrieb der Brennkraftmaschine im oberen Totpunkt so nah wie möglich an den Zylinderkopf heranzuführen.

Gemäß der Patentansprüche 8 bis 13 sind alle Kolben-Teiloberflächen über Übergangsradien miteinander verbunden. Durch diese weichen" Übergänge werden sowohl die Drall- als auch die Tumbleströmung der Ladungsbewegung in ihrer Wirkung unterstützt. Ferner wird durch die definierte Verrundung einer Überhitzung der Kolbenoberfläche an einer Kante vorgebeugt, wodurch Klopfherde vermieden werden. Hierdurch kann das Verdichtungsverhältnis der Brennkraftmaschine erhöht werden, wodurch der Wirkungsgrad verbessert und der Kraftstoffverbrauch abgesenkt wird.

Gemäß der Ausgestaltung nach Patentanspruch 14 entsteht an dem Benzineinspritzventil eine weitere Quetschfläche.

Im Folgenden ist eine bevorzugte Kolbenoberflächengestaltung in zwei Figuren für ein bevorzugtes Ausführungsbeispiel näher erläutert.
- Fig. 1: zeigt eine dreidimensionale Aufsicht auf einen erfindungsgemäßen Kolben;
- Fig. 2: zeigt eine Aufsicht auf eine erfindungsgemäße Kolbenoberfläche in Richtung der Zylinderlängsachse.

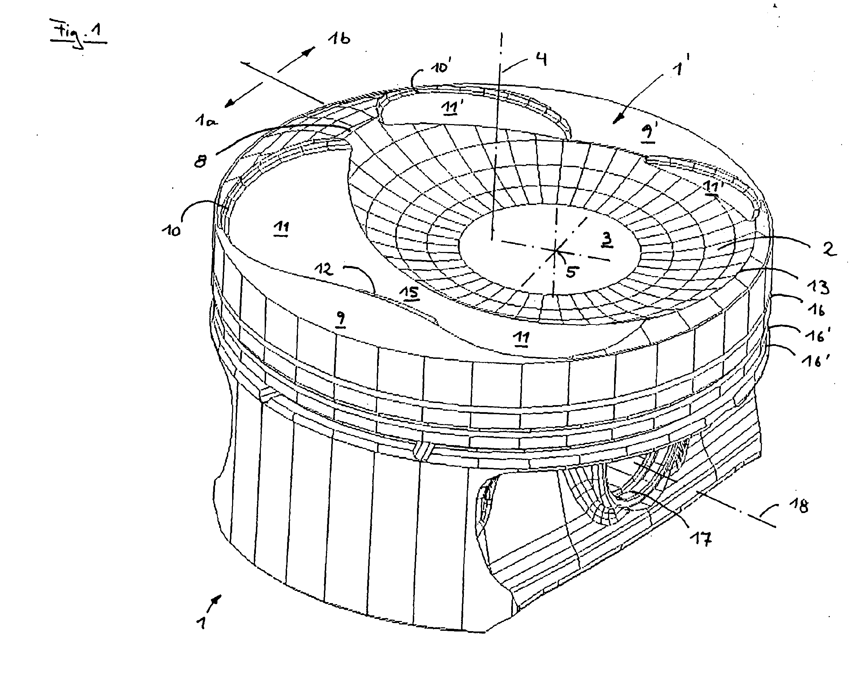

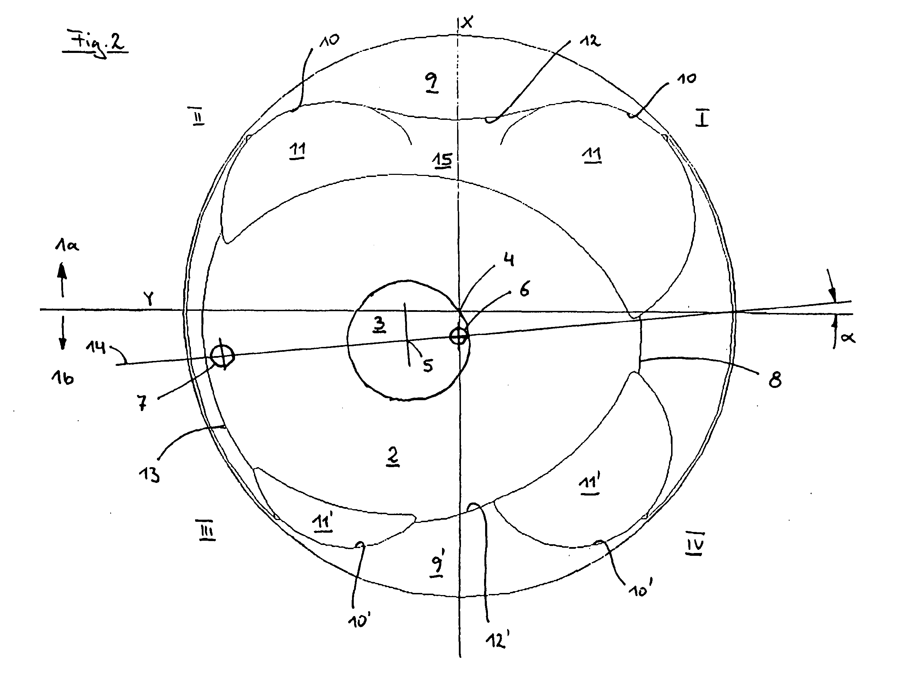

Fig. 1 zeigt eine dreidimensionale Aufsicht auf einen erfindungsgemäßen Kolben 1 für eine Hubkolben-Brennkraftmaschine mit Benzin-Direkteinspritzung. Im vorliegenden Ausführungsbeispiel ist es ein Kastenkolben mit einer Kolbenbolzenbohrung 17, die sich in Richtung einer Brennkraftmaschinenlängsachse 18 erstreckt. Ausgehend von der Kolbenbolzenbohrung 17 sind in Richtung eines nicht dargestellten Brennraumes in einen Außenumfang des Kolbens 1 drei Kolbenringnuten 16, 16' eingearbeitet. Brennraumseitig der Kolbenringnut 16 erstreckt sich radial ein Feuersteg bis an eine Kolbenoberfläche 1'. Bezüglich der Brennkraftmaschinenlängsachse 18 ist in Richtung des Betrachters eine Einlassseite 1a und hinter der Brennkraftmaschinenlängsachse 18 eine Auslassseite 1b des Kolbens 1. Zwischen Einlassseite 1a und Auslassseite 1b ist ein konkaver Bereich 2 in die Kolbenoberfläche 1' eingearbeitet. Der konkave Bereich 2 ist abschnittsweise eine Kugelkalotte, in deren Mittenbereich eine ebene Fläche 3 angeordnet ist. Ein Flächenmittelpunkt 5 der ebenen Fläche 3 ist von einer Zylinderachse 4 beabstandet. Ein nicht dargestellter Zylinderkopf weist zwischen seinen vier Gaswechselventilen eine Zündeinrichtung 6 in der Umgebung der Zylinderachse 4, sowie ein Benzineinspritzventil 7 zwischen einem Gaswechseleinlassventil und einem Gaswechselauslassventil auf, schematisch dargestellt in Fig. 2. Wie ebenfalls in Fig. 2 erkennbar, liegen das Benzineinspritzventil 7 (Kraftstoffaustrittsbohrung), die Zündeinrichtung 6 (Zündelektrode) und der Flächenmittelpunkt 5 im Wesentlichen auf einer gemeinsamen Verbindungslinie.

Auf der dem Benzineinspritzventil 7 abgewandten Seite des konkaven Bereichs 2 geht der konkave Bereich 2 in einen ersten erhabenen Bereich 8 über. Ausgehend vom ersten erhabenen Bereich 8 fällt die Kolbenoberfläche 1' zum Rand des Kolbens 1 in Richtung Feuersteg wieder ab. Auf der Einlassseite 1a sind für zwei nicht dargestellte Einlassgaswechselventile Ausnehmungen 11 und auf der Auslassseite 1b zwei Ausnehmungen 11' für zwei nicht dargestellte Auslassgaswechselventile in die Kolbenoberfläche 1' eingearbeitet. Zwischen den Ausnehmungen 11' ist ein Steg 19 ausgebildet. Dieser Steg 19 ist auf der Einlassseite 1a bis auf die Tiefe der Ausnehmungen 11 ausgearbeitet und bildet einlassseitig einen abgeflachten Bereich 15. Ausgehend von dem Steg 19 und dem abgeflachten Bereich 15 jeweils in Richtung Feuersteg ist jeweils ein zweiter erhabener Bereich 9, 9' ausgebildet. Die zweiten erhabenen Bereiche 9, 9' sind jeweils über einen Steg am Kolbenrand mit dem ersten erhabenen Bereich 8 verbunden. Ferner sind die zweiten erhabenen Bereiche 9, 9' auf der Seite des Benzineinspritzventils 7 über einen Steg 13 miteinander verbunden. Die Ausnehmungen 11, 11' gehen jeweils mit einem ersten Übergangsradius 10, 10' in die erhabenen Bereiche 8, 9, 9' über. Der abgeflachte Bereich 15 geht mit einem zweiten Übergangsradius 12 in die zweiten erhabenen Bereiche 9, 9' über.

Fig. 2 zeigt die Aufsicht auf die Kolbenoberfläche 1'. Zentrisch zum Kolbenaußenumfang ist die Zylinderachse 4. Die Kolbenoberfläche 1' ist durch ein Koordinatenkreuz, dessen Ursprung in der Zylinderachse 4 liegt, in vier Quadranten aufgeteilt. Die Quadranten I und II entsprechen der Einlassseite 1a und werden von einer X-Achse getrennt, die Quadranten III und IV entsprechen der Auslassseite und werden von einer Y-Achse getrennt. In den Quadranten I und II sind die Ausnehmungen 11, in den Quadranten III und IV die Ausnehmungen 11' für die nicht dargestellten Gaswechselventile erkennbar. Zwischen den Ausnehmungen 11 ist der abgeflachte Bereich 15 sowie der zweite erhabene Bereich 9, zwischen den Ausnehmungen 11' ist der zweite erhabene Bereich 9' angeordnet. Zwischen der Ausnehmung 11 im Quadranten I und der Ausnehmung 11' im Quadranten IV ist der erste erhabene Bereich 8 angeordnet. Die zweiten erhabenen Bereiche 9, 9' sind in den Quadranten II und III über den Steg 13 miteinander verbunden. Der konkave Bereich 2 ist von dem ersten erhabenen Bereich 8 sowie den Ausnehmungen 11, 11', dem abgeflachten Bereich 15 und dem Steg 13 umschlossen. Zentrisch im konkaven Bereich 2 ist die ebene Fläche 3 ausgebildet. Die schematisch dargestellte Zündeinrichtung 6 ist ausgehend von der Zylinderachse 4 auf der Trennlinie zwischen Quadrant III und IV etwa 4 mm in Richtung Auslassseite 1b verschoben. Zwischen den Ausnehmungen 11 und 11', im Quadranten 3 ist im Kolbenrandbereich das Benzineinspritzventil 7 schematisch dargestellt. Auf der Verbindungslinie zwischen Zündeinrichtung 6 und Benzineinspritzventil 7 ist der Flächenmittelpunkt 5 der ebenen Fläche 3. Die Verbindungslinie zwischen Zündeinrichtung 6 und Benzineinspritzventil 7 bildet mit der Y-Koordinate, die der Brennkraftmaschinenlängsachse 18 entspricht, einen Winkel α, der insbesondere von der Größe und der Lage der Gaswechselventile beeinflusst wird.

Der Brennraum, der durch die Kolbenoberfläche 1', den nicht dargestellten Zylinderkopf und eine Zylinderwandung gebildet wird, besteht aus einem kolbenseitigen, sowie einem zylinderkopfseitigen Volumenanteil. Der kolbenseitige Volumenanteil ist der Volumenanteil, der unterhalb einer Zylinderkopftrennebene entsteht, wenn der Kolben 1 in seinem mechanischen oberen Totpunkt eingestellt ist. Die Zylinderkopftrennebene entspricht einer kurbelgehäuseseitigen Fläche einer Dichtung. Der kolbenseitige Volumenanteil beträgt im vorliegenden Beispiel 30 %.

Dieser kann auch kleiner, bzw. größer jedoch maximal 40 % des gesamten Brennraumvolumens sein. Der kolbenseitige Volumenanteil kann auch den Wert Null annehmen, wenn eine brennraumseitige Kolbenoberfläche den oberen Totpunkt vollständig überstreicht, sodass kein kolbenseitiges Volumen mehr unter der Zylinderkopftrennebene verbleibt. Der Krümmungsradius der Kugelkalotte im konkaven Bereich 2 beträgt im Ausführungsbeispiel 150 mm, kann in weiteren Ausführungen auch zwischen 10 und 300 mm betragen. Ebenso kann der Anteil der Fläche des konkaven Bereichs 2 mit Kugelkalottenform stark variieren. Während im vorliegenden Beispiel der konkave Bereich 2 mit Ausnahme der ebenen Fläche 3 eine reine Kugelkalottenform aufweist, kann in weiteren Beispielen nur ein kleiner Anteil kugelkalottenförmig sein. Entsprechend dem gewählten Krümmungsradius kann auch die ebene Fläche 3, die hier einen Radius von 15 mm aufweist, einen Radius zwischen 0,5 und 30 mm aufweisen. Im vorliegenden Beispiel ist die ebene Fläche 3 parallel zur Senkrechten auf die Brennraumachse 4 ausgerichtet. Sie kann jedoch in anderen Ausführungsbeispielen um bis zu 20° zu dieser Senkrechten geneigt sein. Unabhängig von einer Neigung der ebenen Fläche 3 bezüglich der Senkrechten auf die Brennraumachse 4 ist immer der tiefste Punkt des konkaven Bereichs 2 Bestandteil der ebenen Fläche 3. Unter einer ebenen Fläche 3 ist eine Fläche zu verstehen, die übliche Gieß- und/oder Bearbeitungstoleranzen aufweisen kann.

Die Ausnehmungen 11, 11' sind zu korrespondierenden Ventiltellern der Gaswechselventile, bei Lage des Kolbens 1 im oberen Totpunkt, weitgehend äquidistant beabstandet und gehen jeweils mit einem ersten Übergangsradius 10, 10', der im vorliegenden Fall 3 mm beträgt, in die zweiten erhabenen Bereiche 9, 9' sowie den ersten erhabenen Bereich 8 über. Dieser Übergangsradius kann in weiteren Ausführungen in einem Bereich von 0,3 bis 3 mm liegen. Der abgeflachte Bereich 15 seinerseits geht mit einem zweiten Übergangsradius 12, der im vorliegenden Fall 5 mm beträgt, in den erhabenen Bereich 9 über. Dieser zweite Übergangsradius 12 kann zwischen 2 und 10 mm betragen. Der erste erhabene Bereich 8 sowie die zweiten erhabenen Bereiche 9, 9' und der Steg 13 bilden gemeinsam mit dem Zylinderkopf Quetschflächen. In weiteren Ausführungsbeispielen können auch weniger Flächen als Quetschfläche dienen.

Der vorliegende Kolben 1 ist aus einem Leichtmetallwerkstoff gegossen, die Kolbenoberfläche 1' ist mechanisch nachbearbeitet. In weiteren Ausführungsbeispielen kann der Kolben 1 als Gießbauteil ohne weitere mechanische Nachbearbeitung der Kolbenoberfläche 1' oder als Pressbauteil produziert sein.

Zusammenfassend kann festgestellt werden, dass der erfindungsgemäße Kolben 1 mit seiner Kolbenoberfläche 1' einen nicht zerklüfteten Brennraum mit ausgezeichneten Verbrennungseigenschaften darstellt, der besonders für Verdichtungsverhältnisse > 10 geeignet ist. Die ausgewogene flache Kolbenoberfläche 1' reduziert beim Betrieb der Brennkraftmaschine die HC-Emissionen und aufgrund fehlender Kanten ist die Klopfneigung beim Betrieb wesentlich herabgesetzt. Der Hauptvorteil des vorliegenden Kolbens 1 besteht jedoch darin, dass der konkave Bereich 2 derart ausgebildet ist, dass er sowohl eine Drall- als auch eine Tumbleströmung bei der Gemischaufbereitung unterstützt. Die Kolbenoberfläche 1' ist optimal bezüglich der Bereitstellung eines zündfähigen Kraftstoff-/Luft-Gemischs am Zündort der Zündeinrichtung 6. Die flache Bauform reduziert darüber hinaus das Kolbengewicht, wodurch erfindungsgemäße Kolben 1 besonders für hochdrehende Brennkraftmaschinen mit einem Hub-/Bohrungsverhältnis < 1,1, mit oder ohne Aufladung, eingesetzt werden kann. Vorzugsweise weist die Brennkraftmaschine ein Hub-/Bohrungsverhältnis im Bereich > 0,6 bis < 1 auf.

### Bezugszeichenliste

- 1: Kolben
- 1a: Einlassseite
- 1b: Auslassseite
- 1': Kolbenoberfläche
- 2: Konkaver Bereich
- 3: Ebene Fläche
- 4: Zylinderachse
- 5: Flächenmittelpunkt
- 6: Zündeinrichtung
- 7: Benzineinspritzventil
- 8: Erster erhabener Bereich
- 9, 9': Zweiter erhabener Bereich
- 10, 10': Erster Übergangsradius
- 11, 11': Ausnehmung
- 12: Zweiter Übergangsradius
- 13: Steg
- 14: Verbindungslinie
- 15: Abgeflachter Bereich
- 16, 16': Kolbenringnut
- 17: Kolbenbolzenbohrung
- 18: Brennkraftmaschinenlängsachse
- I: Erster Kolbenquadrant
- II: Zweiter Kolbenquadrant
- III: Dritter Kolbenquadrant
- IV: Vierter Kolbenquadrant

## Patentansprüche

1. Hubkolben-Brennkraftmaschine mit Benzin-Direkteinspritzung mit
- zumindest einem Brennraum, der einerseits von einem Zylinderkopf und andererseits von einem Kolben begrenzt ist und
- der Brennraum in ein zylinderkopfseitiges und ein kolbenseitiges Volumen aufgeteilt ist, wobei
- der Zylinderkopf zumindest zwei Einlass-Gaswechselventile und zumindest ein Auslass-Gaswechselventil, sowie
- eine zwischen den Gaswechselventilen angeordnete Zündeinrichtung, sowie
- ein zwischen einem Einlass- und einem Auslass-Gaswechselventil angeordnetes Benzineinspritzventil aufweist, wobei
- eine brennraumseitige Kolbenoberfläche einen konkaven Bereich aufweist,
- der auf der dem Benzineinspritzventil abgewandten Seite in einen ersten erhabenen Bereich übergeht und wobei
- der Zylinderkopf einlassseitig zwei Gaswechseleinlassventile, sowie auslassseitig zwei Gaswechselauslassventile mit Ventiltellern aufweist und
- die Kolbenoberfläche für jeden Ventilteller eine Ausnehmung aufweist,
**dadurch gekennzeichnet, dass** der konkave Bereich (2)
- abschnittsweise eine Kugelkalotte ist und
- eine weitgehend ebene Fläche (3) mit einem Flächenschwerpunkt (5) aufweist, der zwischen der Zündeinrichtung (6) und dem Benzineinspritzventil (7) angeordnet ist und
- einen kolbenseitigen Volumenanteil von höchstens 40 % aufweist, und wobei
- ein zwischen zwei einlassseitigen Ausnehmungen (11) bestehender zweiter erhabener Bereich (9) und/oder ein zwischen zwei auslassseitigen Ausnehmungen (11') bestehender zweiter erhabener Bereich (9') und/oder der erste erhabene Bereich (8) eine Quetschfläche ist.

2. Hubkolben-Brennkraftmaschine nach Patentanspruch 1,
**dadurch gekennzeichnet, dass** der konkave Bereich (2) einen Krümmungsradius aufweist, der zwischen 10 mm und 300 mm beträgt.

3. Hubkolben-Brennkraftmaschine nach Patentanspruch 1 oder 2,
**dadurch gekennzeichnet, dass** die ebene Fläche (3) höchstens um 20° zu einer Senkrechten auf die Brennraumachse (4) geneigt ist.

4. Hubkolben-Brennkraftmaschine nach einem der Patentansprüche 1 bis 3, wobei der konkave Bereich einen tiefsten Punkt bezüglich der Kolbenoberfläche (1') aufweist,
**dadurch gekennzeichnet, dass** der tiefste Punkt innerhalb der ebenen Fläche (3) angeordnet ist.

5. Hubkolben-Brennkraftmaschine nach einem der Patentansprüche 1 bis 4,
**dadurch gekennzeichnet, dass** die Fläche (3), ausgehend von dem Flächenschwerpunkt (5) innerhalb eines Radius von 0,5 mm bis 30 mm angeordnet ist.

6. Hubkolben-Brennkraftmaschine nach einem der zuvor genannten Patentansprüche, wobei dem Kolben (1) ein oberer Totpunkt zugeordnet ist,
**dadurch gekennzeichnet, dass** die Kolbenoberfläche (1') zumindest eine Ausnehmung (11, 11') aufweist, die im oberen Totpunkt mit einem Ventilteller in einer Schließstellung korrespondiert.

7. Hubkolben-Brennkraftmaschine nach Patentanspruch 6,
**dadurch gekennzeichnet, dass** die Ausnehmung (11, 11') im oberen Totpunkt weitgehend äquidistant von dem Ventilteller beabstandet ist.

8. Hubkolben-Brennkraftmaschine nach einem der zuvor genannten Patentansprüche,
**dadurch gekennzeichnet, dass** die Ausnehmung (11, 11') mit einem ersten Übergangsradius (10, 10') in den zweiten erhabenen Bereich (9, 9') übergeht.

9. Hubkolben-Brennkraftmaschine nach Patentanspruch 8,
**dadurch gekennzeichnet, dass** der erste Übergangsradius (10, 10') zwischen 0,3 mm und 3 mm beträgt.

10. Hubkolben-Brennkraftmaschine nach einem der zuvor genannten Patentansprüche,
**dadurch gekennzeichnet, dass** zwischen zwei einlassseitigen Ausnehmungen (11) und/oder zwei auslassseitigen Ausnehmungen (11') der zweite erhabene Bereich (9, 9') zumindest abschnittsweise ein abgeflachter Bereich (15) ist.

11. Hubkolben-Brennkraftmaschine nach Patentanspruch 10,
**dadurch gekennzeichnet, dass** der abgeflachte Bereich (15) mit den korrespondierenden Ausnehmungen (11, 11') eine Ebene bildet.

12. Hubkolben-Brennkraftmaschine nach Patentanspruch 10 oder 11,
**dadurch gekennzeichnet, dass** der abgeflachte Bereich (15) mit einem zweiten Übergangsradius (12, 12') in den zweiten erhabenen Bereich (9, 9') übergeht.

13. Hubkolben-Brennkraftmaschine nach Patentanspruch 12,
**dadurch gekennzeichnet, dass** der zweite Übergangsradius (12, 12') zwischen 2 mm und 10 mm beträgt.

14. Hubkolben-Brennkraftmaschine nach einem der zuvor genannten Patentansprüche, wobei die Kolbenoberfläche einlassseitig und auslassseitig einen zweiten erhabenen Bereich aufweist,
**dadurch gekennzeichnet, dass** die zweiten erhabenen Bereiche (9, 9') auf der dem Benzineinspritzventil (7) zugewandten Seite über einen Steg (13) miteinander verbunden sind.

## Claims

1. A reciprocating internal combustion engine with direct petrol injection, comprising
- at least one combustion chamber bounded on one side by a cylinder head and on the other side by a piston and
- the combustion chamber is divided into a space at the cylinder-head end and a space at the piston end, wherein
- the cylinder head has at least two inlet gas change valves and at least one outlet gas change valve and
- an ignition device disposed between the gas change valves and
- a petrol injection valve between an inlet gas change valve and an outlet gas change valve, wherein
- a piston surface on the combustion-chamber side has a concave region
- which, on the side remote from the fuel injection valve, merges into a first raised region and wherein
- the cylinder head has two gas change inlet valves on the inlet side and two gas change outlet valves on the outlet side with valve discs and
- the piston surface for each valve disc has a recess,
**characterised in that** the concave region (2)
- is in part a spherical cap and
- has a substantially flat surface (3) with a centre of gravity (5) situated between the ignition device (6) and the petrol injection valve (7) and
- takes up a proportion of not more than 40% of the volume on the piston side and wherein
a second raised region (9) between two recesses (11) on the inlet side and/or a second raised region (9') between two recesses (11') on the outlet side and/or the first raised region (8) is a squeezable surface.

2. An engine according to claim 1,
**characterised in that** the concave region (2) has a radius of curvature between 10 mm and 300 mm.

3. An engine according to claim 1 or claim 2,
**characterised in that** the flat surface (3) is inclined at not more than 20° to a normal to the combustion-chamber axis (4).

4. An engine according to any of claims 1 to 3, wherein the concave region has a lowest point relative to the piston surface (1'), **characterised in that** the lowest point lies within the flat surface (3).

5. An engine according to any of claims 1 to 4,
**characterised in that** the surface (3), starting from the centre of gravity thereof (5), lies within a radius of 0.5 mm to 30 mm.

6. An engine according to any of the preceding claims, wherein the piston (1) is associated with a top dead centre position,
**characterised in that** the piston surface (1') has at least one recess (11, 11') which in the top dead centre position corresponds to a valve disc in a closed position.

7. An engine according to claim 6,
**characterised in that** in the top dead centre position the recesses (11, 11') are substantially equidistant from the valve disc.

8. An engine according to any of the preceding claims,
**characterised in that** the recesses (11, 11') have a first transition radius (10, 10') which merges into the second raised regions (9, 9').

9. An engine according to claim 8,
**characterised in that** the first transition radius (10, 10') is between 0.3 mm and 3 mm.

10. An engine according to any of the preceding claims,
**characterised in that** between two inlet-side recesses (11) and/or two outlet-side recesses (11') the second raised region (9, 9') is, at least in part, a flat region (15).

11. An engine according to claim 10,
**characterised in that** the flattened region (15) forms a plane with the corresponding recesses (11, 11').

12. An engine according to claim 10 or claim 11,
**characterised in that** the flattened region (15) merges via a second transition radius (12, 12') into the second raised region (9, 9').

13. An engine according to claim 12,
**characterised in that** the second transition radius (12, 12') is between 2 mm and 10 mm.

14. An engine according to any of the preceding claims, wherein the piston surface has a second raised region on the inlet side and on the outlet side,
**characterised in that** the second raised regions (9, 9') are connected to one another by a web (13) on the side facing the fuel injection valve (7).

## Revendications

1. Moteur à combustion interne alternatif à injection directe d'essence, comprenant :
- au moins une chambre de combustion délimitée d'un côté par une culasse et de l'autre côté par un piston, la chambre de combustion étant divisée en un volume côté culasse et un volume côté piston, et la culasse présentant au moins deux soupapes à deux voies d'admission et au moins une soupape à deux voies d'échappement,
- un dispositif d'allumage entre les soupapes à deux voies,
- un injecteur d'essence entre une soupape à deux voies d'admission et une soupape à deux voies d'échappement,
une surface de piston côté chambre de combustion présentant une zone concave, qui du côté détourné de l'injecteur d'essence passe dans une première zone convexe,
la culasse présentant côté admission deux soupapes à deux voies d'admission ainsi que côté échappement deux soupapes à deux voies d'échappement avec des têtes de soupape, et
la surface de piston présente un évidement pour chaque tête de soupape,
**caractérisé en ce que**
la zone concave (2) est en partie une calotte sphérique et présente une surface (3) pour l'essentiel plane avec un centre de gravité (5) disposé entre le dispositif d'allumage (6) et l'injecteur d'essence (7), son volume côté piston étant de 40 % au maximum, et
une deuxième zone convexe (9) située entre deux évidements (11) côté admission et/ou une deuxième zone convexe (9') située entre deux évidements (11') côté échappement et/ou la première zone convexe (8) est une surface de compression.

2. Moteur à combustion interne alternatif selon la revendication 1,
**caractérisé en ce que**
la zone concave (2) présente un rayon de courbure entre 10 mm et 300 mm.

3. Moteur à combustion interne alternatif selon la revendication 1 ou 2,
**caractérisé en ce que**
la surface plane (3) est inclinée au maximum de 20° par rapport à une perpendiculaire sur l'axe de chambre de combustion (4).

4. Moteur à combustion interne alternatif selon l'une quelconque des revendications 1 à 3, dans lequel la zone concave présente un point le plus bas par rapport à la surface de piston (1'),
**caractérisé en ce que**
le point le plus bas est disposé dans la surface plane (3).

5. Moteur à combustion interne alternatif selon l'une quelconque des revendications 1 à 4,
**caractérisé en ce que**
la surface (3) a un rayon intérieur compris entre 0,5 mm et 30 mm à partir du centre de gravité de la surface (5).

6. Moteur à combustion interne alternatif selon l'une quelconque des revendications précédentes, dans lequel un point mort haut est associé au piston (1),
**caractérisé en ce que**
la surface de piston (1') présente au moins un évidement (11, 11') qui, dans le point mort haut, correspond avec une tête de soupape en position de fermeture.

7. Moteur à combustion interne alternatif selon la revendication 6,
**caractérisé en ce que**
l'évidement (11, 11') dans le point mort haut est pour l'essentiel équidistant de la tête de soupape.

8. Moteur à combustion interne alternatif selon l'une quelconque des revendications précédentes,
**caractérisé en ce que**
l'évidement (11, 11') passe avec un premier rayon de transition (10, 10') dans la deuxième zone convexe (9, 9').

9. Moteur à combustion interne alternatif selon la revendication 8,
**caractérisé en ce que**
le premier rayon de transition (10, 10') est compris entre 0,3 mm et 3 mm.

10. Moteur à combustion interne alternatif selon l'une quelconque des revendications précédentes,
**caractérisé en ce qu'**
entre deux évidements (11) côté admission et/ou deux évidements (11') côté échappement, la deuxième zone convexe (9, 9') est au moins en partie une zone aplatie (15).

11. Moteur à combustion interne alternatif selon la revendication 10,
**caractérisé en ce que**
la zone aplatie (15) forme un plan conjointement avec les évidements (11, 11') correspondants.

12. Moteur à combustion interne alternatif selon la revendication 10 ou 11,
**caractérisé en ce que**
la zone aplatie (15) passe avec un deuxième rayon de transition (12, 12') dans la deuxième zone convexe (9, 9').

13. Moteur à combustion interne alternatif selon la revendication 12,
**caractérisé en ce que**
le deuxième rayon de transition (12, 12') est compris entre 2 mm et 10 mm.

14. Moteur à combustion interne alternatif selon l'une quelconque des revendications précédentes, dans lequel la surface de piston présente une deuxième zone convexe côté admission et côté échappement,
**caractérisé en ce que**
du côté tourné vers l'injecteur d'essence (7), les deuxièmes zones convexes (9, 9') sont reliées l'une à l'autre par une nervure (13).
